# EUROPÄISCHE PATENTSCHRIFT

(11) **EP 0 754 361 B1**
(45) Veröffentlichungstag und Bekanntmachung des Hinweises auf die Patenterteilung: **03.03.1999**
(21) Anmeldenummer: 95915131.7
(22) Anmeldetag: 05.04.1995
(51) Int. Cl.: H02K 3/04, H02K 3/28

(54) **MEHRPHASIGE ELEKTRISCHE MASCHINE MIT ZUSAMMENGEFÜGTEN LEITERSTRÄNGEN**
MULTI-PHASE ELECTRIC MACHINE WITH BRAIDED CONDUCTORS
MACHINE ELECTRIQUE POLYPHASEE A CONDUCTEURS DE PHASE REUNIS

(30) Priorität: 06.04.1994 DE 4411749
(43) Veröffentlichungstag der Anmeldung: 22.01.1997
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9500459
(87) Internationale Veröffentlichungsnummer: WO9528026

(56) Entgegenhaltungen:
- DE-B- 1 026 841
- DE-C- 4 111 626
- DE-C- 4 234 145
- GB-A- 1 281 691

## Beschreibung

Die Erfindung betrifft eine mehrphasige elektrische Maschine gemäß dem Oberbegriff des Anspruch 1 sowie ein Verfahren zu Herstellung einer derartigen Maschine.

Aus der *US-PS 4 115 915, DE 41 11 626 C2* und der *DE 42 34 145 C1* sind Stabwicklungen bekannt, deren Leiterstränge aus Teilstücken zusammengefügt werden. Die Verbindungsstellen liegen hierbei in den Wickelköpfen und ermöglichen nur ein lokal eingeschränktes Aufschmelzen der Kontaktflächen zur Verringerung des Übergangwiderstandes.

In der *DE-B-1 026 841* wir ein stabförmiger Leiter beschrieben, dessen Mittelteil aus Teilleitern besteht, die an den Enden noch innerhalb der Nut mit massive Leiterteile verzapft sind. An die massiven Leiterteile schließen sich in üblicher Weise die Wickelköpfe an. In den bereits in der Nut liegenden Massivleitern entstehen erhöhte Verluste aufgrund der Stromverdrängung und der Aufwand zur Herstellung der vielen Verbindungsstellen ist hoch.

Im dritten Band "Wechselstrom-Sonderwicklungen" von H. Sequenz, Wien 1954, werden auf Seite 348 Kunststäbe beschrieben, die - sich paarweise ergänzend - jeweils um 180° verdrillt sind. Die Stäbe werden als Blechschnitte durch Verbiegen in ihre endgültige Form gebracht und abschließend paarweise axial in die Nuten eingeschoben.

Weiterhin ist aus der *DE-AS 27 41 415* eine Zweischicht-Stabwicklung bekannt, in der durch asymmetrische Ausnutzung die mittlere Nut einer Spulengruppe nur jeweils zu einem Stromdurchgang genutzt wird. In dieser realisiert ein Sonderstab den Übergang von der Oberschicht zur Unterschicht. Der Sonderstab weist in den Nuten den doppelten Querschnitt der normalen Nutstäbe auf und wird wie diese zusätzlich in den Wickelköpfen mit nachfolgenden Nutstäben zusammengefügt.

Der Erfindung liegt die Aufgabe zugrunde eine mehrphasige elektrische Maschine, deren Leiterstränge aus vorgefertigten Teilen zusammengefügt sind, derart weiter zu bilden, daß eine einfache und sichere Verbindung auch von Leiterteilen mit großem Leiterquerschnitt ermöglicht und eine vollständige und gleichmäßige Raumausnutzung erreicht wird.

Die Aufgabe wird erfindungsgemäß mit den Merkmalen der Ansprüche 1 oder 5 gelöst.

U-förmig vorgefertigte Leiterteile werden ohne Biegeradien berücksichtigen zu müssen, in ihre endgültige Position gebracht und in den Teilbereichen die anschließend im Magnetfeld liegen miteinander verschweißt. Hierdurch sind verflochtene, mehrphasige Wicklungen herstellbar, wobei auch bei großen Maschinen die vorzufertigenden Teile geringe Außenabmessungen aufweisen und z.B. als Gesenkschmiedeteil, Gußteil oder pulvermetallurgisch vorzufertigen sind. Durch das Verschweißen im Nutbereich anstatt an den Wickelkopfstirnseiten, werden große Kontaktflächen realisierbar, die problemlos aufschmelzbar sind, da die Isolierung anschließend vor dem Einsetzen der weichmagnetischen Segmente erfolgt.

Vorteilhaft füllen jeweils Nutstäbe einen Nutraum vollständig aus, indem sie an ihren Enden in Richtung der Nutbreite nebeneinanderliegend im Verlauf der Nut einmal um 180° verdrillt sind, wobei ihre vorgefertigten Hälften in der Nut an in Richtung der Nuttiefe gegenüberliegenden Oberflächen verschweißt werden. Als Aufschweißstrecke steht hierzu fast die gesamte Nutlänge zur Verfügung, weshalb auch bei geringen Einschweißtiefen relativ zum Leiterquerschnitt große aufgeschmolzene Verbindungszonen realisierbar sind.

In dreiphasigen Maschinen ergeben sich durch verflochtene Leiterverläufe baugleiche Leiterstränge, deren Verlauf sich alle vier Polteilungen periodisch wiederholt und in dem innerhalb einer Periode vier unterschiedlich angeordnete Leiterteile in Reihe geschaltet sind. Hierdurch wird ein stabiler, spielfreier Aufbau gewährleistet und der Raum in den Wickelköpfen vollständig und gleichmäßig ausgenutzt.

Die **Zeichnungen** stellen vorteilhafte Ausführungsformen der Erfindung dar.
- Fig. 1: zeigt einen Ausschnitt eines linearisierten Leiterstranges aus einer dreiphasigen Leiterschicht beim Zusammenfügen;
- Fig. 2: zeigt einen Ausschnitt aus einer linearisierten dreiphasigen Leiterschicht vor dem Zusammenfügen der beiden Wickelkopfpakete;
- Fig. 3: zeigt den Aufbau eines Leiterstranges einer 24-poligen, dreiphasigen Radialluftspaltmaschine mit einem Nutstab pro Nut;
- Fig. 4: zeigt die vollständige Wicklung der Maschine aus Fig. 3;
- Fig. 5: zeigt einen Ausschnitt aus einem linearisierten Leiterstrang mit zwei Kunststäben pro Nut beim Zusammenfügen der vorgefertigten U-Teile.

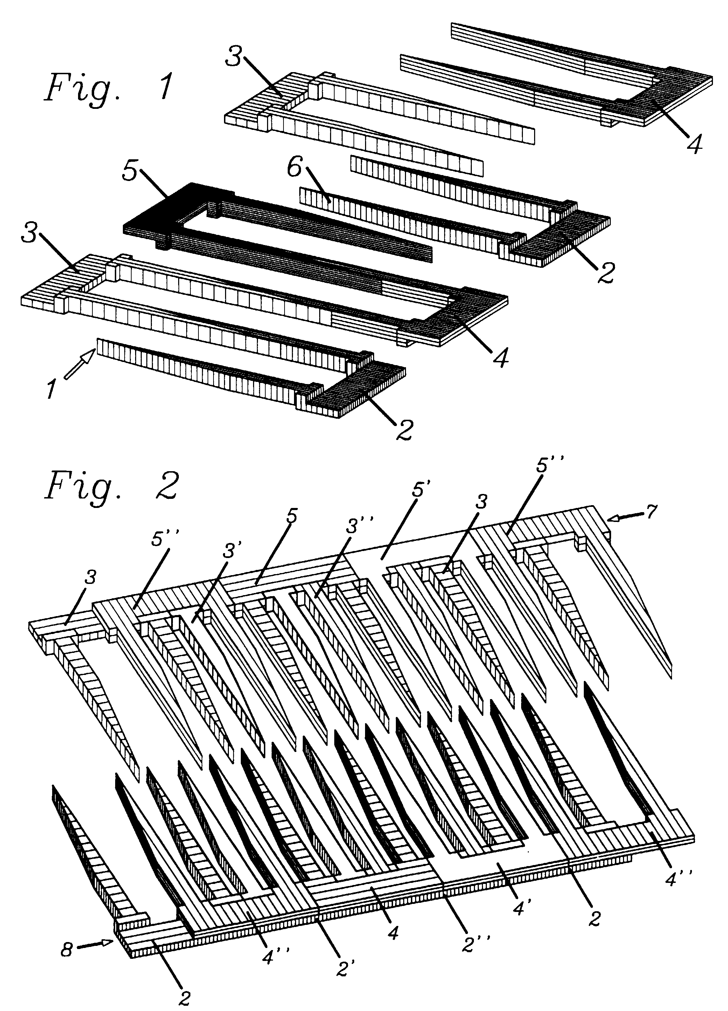

Der in **Fig. 1** dargestellte Ausschnitt aus einem Leiterstrang **1** einer dreiphasigen Leiterschicht umfaßt sieben Polteilungen bzw. sieben vorgefertigte U-Teile **2** bis **5** die im Nutbereich an langen schräg verlaufenden Kontaktflächen **6** zusammengefügt werden. Der Leiterverlauf wiederholt sich alle vier Polteilungen, wobei durch Ausnutzung von Symmetrien jeweils zwei U-Teilbauformen **2** und **3** bzw. **4** und **5** baugleich sind. Diese vorteilhafte Reduzierung der Leiterbauformen gilt nicht nur für Linearmotoren sondern kann an unterschiedlichen Achsen gekrümmt und mit unterschiedlich ausgestalteten Enden ebenfalls auf rotierende Radial- und Axialluftspaltmaschinen übertragen werden.

Alle Leiterstränge einer dreiphasigen Maschine sind aufgrund des verflochtenen Leiterverlaufs baugleich, wobei alle Leiterteile **2** bis **5"** einer verflochtenen Leiterschicht in einem vorgelagerten Arbeitsschritt zu zwei Wickelkopfpaketen zusammengesetzt werden.

**Fig. 2** zeigt die beiden erst in vier Polteilungen zusammengesetzten Wickelkopfpakete **7, 8** einer linearisierten dreiphasigen Maschine vor dem Zusammenschieben. Das Verschweißen erfolgt ausschließlich im Nutbereich vor dem Aufbringen der Nutisolierung. Hierdurch sind trotz der geringen Eindringtiefe des Laserstrahls in reines Leitermaterial auch Wicklungen mit sehr großen Leiterquerschnitten problemlos herstellbar. Für mehrlagige Wicklungen werden verflochtene Leiterschichten in Richtung der Nuttiefe übereinander angeordnet, wobei der Schichtübergang entweder durch spezielle unsymmetrische U-Teile oder außerhalb der Wickelköpfe erfolgt. Leiterteile **2** bis **5"** der drei Phasen sind unterschiedlich schraffiert.

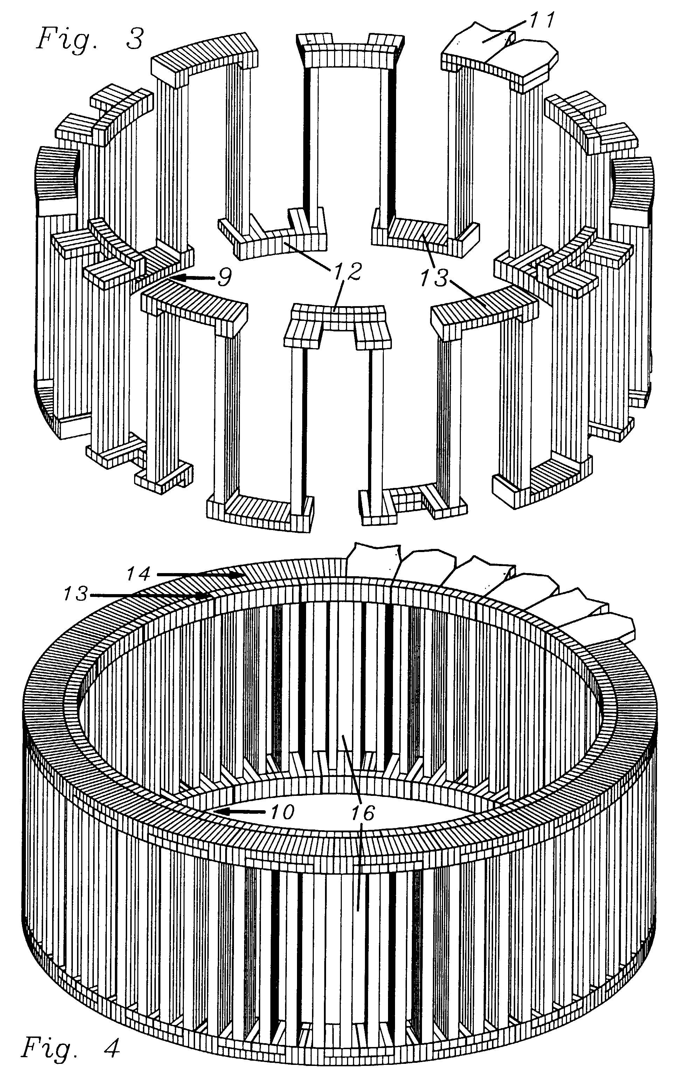

In den **Fig. 3** und 4 wird ein Leiterstrang **9** und die komplette Wicklung 10 einer 24-poligen, dreiphasigen Maschine mit einem Nutstab pro Nut dargestellt. Von der Zuleitung **11** ausgehend durchläuft der Leiterstrang **9** einmal mäanderförmig den Umfang der Maschine, wobei nur zwei unterschiedliche U-Teile **12, 13** benötigt werden. Alle drei Leiter sind baugleich und verlaufen um jeweils vier Nutteilungen zueinander versetzt, so daß die Wickelköpfe gleichmäßig und vollständig ausgenutzt werden. Während die äußeren Verbindungen **13** nur auf Nuthöhe **14** verlaufen, nutzen die inneren Verbindungen **12** den axial dem Joch vorgelagerten Raum **15** aus. Die tangentiale Verbindung eines Leiterstranges in einem Wickelkopf erfolgt somit immer abwechselnd in zwei unterschiedlichen, ringförmigen Wickelkopfbereichen **14,15**. In den Freiraum zwischen den Leitern werden - nachdem die gesamte Wicklung **10** funktionsbereit fertiggestellt ist - weichmagnetische Zahnsegmente radial eingesetzt.

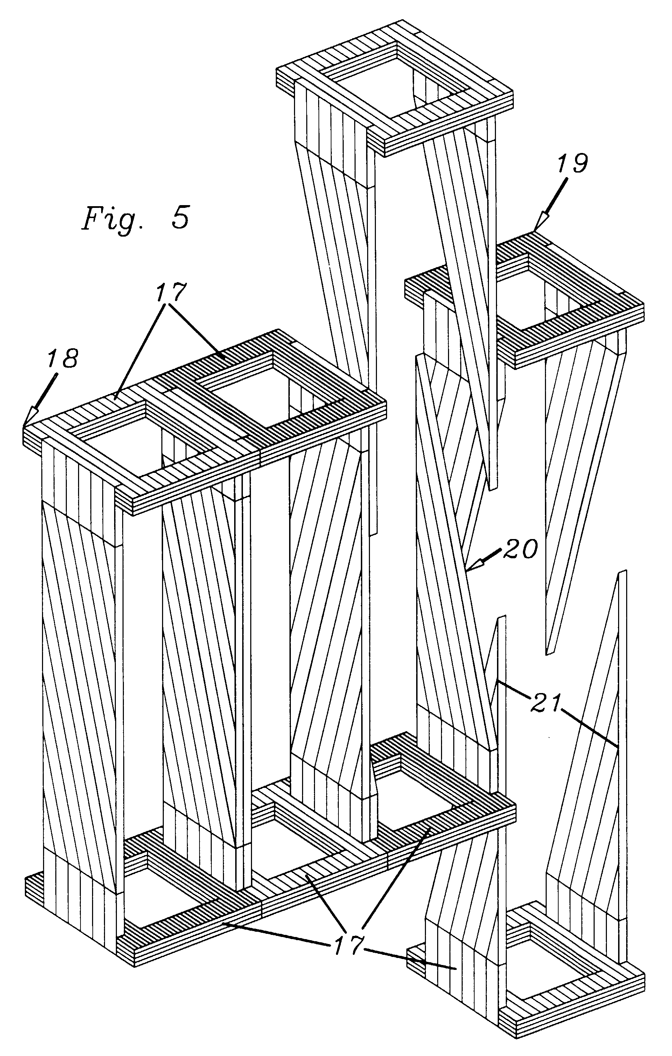

In **Fig. 5** sind in einem vier Polteilungen umfassenden, wiederum linearisierten Ausschnitt acht baugleiche U-Teile **17** dargestellt, wobei jeweils die Enden von vier U-Teilen zusammen eine rechteckförmige Nut ausfüllen. Sie gehören zu zwei Leitersträngen **18, 19,** die vorteilhaft in Reihe geschaltet sind und den Strom in den Wickelköpfen in unterschiedliche Richtungen leiten. Bei jedem Nutdurchgang erfolgt für jeden Leiterstrang eine Verdrillung um 180°. Zur Veranschaulichung des Nutseitenwechsels **20** sind rechts die beiden U-Teile des Leiterstranges **18** in Nutrichtung auseinandergezogen dargestellt. Wenn die U-Teile **17** an ihren Enden Einschnitte **21** aufweisen, so entsteht hierdurch mit geringem Herstellungsaufwand eine Kunsttabwicklung, die ohne Eingeschränkung durch die Stromverdrängung mit lediglich zwei Kunststäben auch große Nutquerschnitte mit sehr hohem Füllfaktor ausnutzt.

## Patentansprüche

1. Mehrphasige elektrische Maschine, deren Leiterstränge (1) aus vorgefertigten Leiterteilen (2 bis 5) in Teilbereichen (6) der Leiterstränge (1) zusammmengefügt sind, die sich während des Betriebs der Maschine im magnetischen Feld befinden, Wobei der Querschnitt der Leiterstränge (1) in etwa konstant bleibt,
**dadurch gekennzeichnet,** daß die vorgefertigten Leiterteile (2 bis 5) mindestens zwei Teilbereiche aufweisen, die sich während des Betriebs der Maschine im magnetischen Feld befinden und durch mindestens einen Teilbereich getrennt sind, der sich während des Betriebs der Maschine außerhalb des magnetischen Feldes befindet.

2. Mehrphasige elektrische Maschine nach Anspruch 1,
**dadurch gekennzeichnet**, daß die Leiterteile (2 bis 5, 12, 13, 17) eine u-förmige Gestalt aufweisen, wobei die beiden Enden Nutstabhälften bilden, deren Querschnitt zu den Enden hin kontinuierlich abnimmt.

3. Mehrphasige elektrische Maschine nach Anspruch 2,
**dadurch gekennzeichnet,** daß die beiden in einer Nut miteinander verbundenen Enden der Leiterteile (17) in unterschiedlichen Nuthälften bezüglich der Nutbreite angeordnet sind.

4. Mehrphasige elektrische Maschine nach Anspruch 1,
**dadurch gekennzeichnet**, daß die Leiterteile ohne Biegeradien vorgefertigt sind und die Schweißnaht in einer Oberfläche des Leiterstranges verläuft, deren Normale in etwa parallel zur Magnetfeldrichtung ist.

5. Verfahren zur Herstellung einer mehrphasigen elektrischen Maschine, deren Leiterstränge aus vorgefertigten Leiterteilen zusammengefügt sind,
**dadurch gekennzeichnet**, daß mehrere unmittelbar in Reihe geschaltete, u-förmige Leiterteile in Teilbereichen des Leiterstranges miteinander verschweißt werden, die anschließend im Magnetfeld liegen.

6. Verfahren zur Herstellung einer mehrphasigen elektrischen Maschine nach Anspruch 5,
**dadurch gekennzeichnet**, daß die Leiterteile ohne Biegeradien vorgefertigt werden, indem aus Leiterblech herausgeschnittene Teile zu u-förmigen Teilen zusammengefügt und anschließend außer an ihren Enden mit einer Isolierschicht überzogen werden.

7. Verfahren zur Herstellung einer mehrphasigen elektrischen Maschine nach Anspruch 5,
**dadurch gekennzeichnet,** daß alle Leiterteile einer mehrphasigen Leiterlage in zwei Wickelkopfpaketen mit herausragenden Nutstabhälften zusammenmontiert werden, und die beiden Hälften in einem Arbeitsschritt aneinander gesetzt und anschließend an den unisolierten Leiterenden verschweißt werden.

8. Verfahren zur Herstellung einer mehrphasigen elektrischen Maschine nach Anspruch 5,
**dadurch gekennzeichnet**, daß die den magnetischen Fluß führenden Segmente erst nachdem die Wicklung vollständig zusammengefügt und die Verbindungsstellen mit einer Isolierschicht versehen wurden in die funktionsbereite Wicklung eingesetzt werden.

## Claims

1. A multi-phase electric machine, the conductor lanes (1) of said machine being joined from prefabricated conductor parts in sections of said conductor lanes, said sections being located in the magnetic field of the machine during operation and with cross sections of said conductor lanes (1) remaining approximately constant,
wherein the prefabricated conductor parts consist of at least two sections which are located in the magnetic field during the operation of the machine and which are separated by at least one section which is located outside the magnetic field during operation of the machine.

2. A multi-phase electric machine as recited in claim 1,
wherein the conductor parts possess a U-shaped form in which the two ends form halves of groove bars and the cross sections of said ends are decreasing continuously towards the ends.

3. A multi-phase electric machine as recited in claim 2,
wherein the two ends of conductor parts connected in one groove are arranged in different halves of the groove with respect to the groove width.

4. A multi-phase electric machine as recited in claim 1, wherein the conductor parts are prefabricated without bending radii and where the weld is located in the surface of a conductor lane whose normal lies approximately parallel to the direction of the magnetic field.

5. A process for the manufacture of a multi-phase electric machine, the conductor lanes of said machine being joined from prefabricated conductor parts,
wherein several directly serially switched, U-shaped conductor parts are welded together in partial areas of the conductor lanes, said partial areas being thereafter located in the magnetic field.

6. A process for the manufacture of a multi-phase electric machine as recited in claim 5,
wherein the conductor parts are prefabricated without bending radii by joining into U-shaped parts sections which have been cut from sheet metal and which, except for their ends, are subsequently coated with an insulating layer.

7. A process for the manufacture of a multi-phase electric machine as recited in claim 5,
wherein all conductor parts in a multi-phase conductor layer are assembled into two winding overhang packets with protruding groove bar halves and wherein the said two packets are joined in one work step and subsequently welded together at the uninsulated conductor ends.

8. A process for the manufacture of a multi-phase electric machine as recited in claim 5,
wherein, only after the winding has been joined completely and the junctures have been supplied with an insulating layer, the segments that carry magnetic flow are inserted into the ready-to-function winding.

## Revendications

1. Machine électrique polyphasée, dont les cordes conductrices (1) sont assemblées des éléments du conducteur préfabriqués (de 2 à 5) dans des parties (6) des cordes conductrices (1), qui se trouvent dans le champ magnétique pendant le fonctionnement de la machine, mais, la section des cordes conductrices (1) est environnement constante; et dont il est caractéristique que les éléments du conducteur préfabriqués (de 2 à 5) ont au moins deux parties, qui se trouvent dans le champ magnétique pendant le fonctionnement de la machine, et qu'ils sont séparés de, au moins, une partie qui se trouve hors du champ magnétique pendant le fonctionnement de la machine.

2. Machine électrique polyphasée selon la revendication no. 1, dont il est caractéristique que les éléments du conducteur (de 2 à 5, 12, 13, 17) ont la forme d'une <U>, et que les deux extrémités forment des moitiés des barres de la rainure dont la section diminue continuellement dans la direction des extrémités.

3. Machine électrique polyphasée selon la revendication no.2, dont il est caractéristique que les extrémités des éléments du conducteur (17) qui sont assemblés dans une rainure, sont postionnés dans des différentes moitiés des barres de la rainure en ce qui concerne la largeur de la rainure.

4. Machine électrique polyphasée selon la revendication no. 1, dont il est caractéristique que les éléments du conducteur sont préfabriquées sans un rayon du pli, et que la ligne de soudure se trouve dans un surface de la corde conductrice, dont la normale est environnement parallèle à la direction du champ magnétique.

5. Procédure pour la fabrication d'une machine électrique polyphasée, dont les cordes conductrices sont assemblées des éléments du conducteur préfabriqués, et dont il est caractéristique que plusieurs éléments du conducteur, qui ont la forme d'une <U> et qui sont accouplés immédiatement en série, sont soudés l'un avec l'autre dans les parties de la corde conductrice qui se trouveront dans le champ magnétique.

6. Procédure pour la fabrication d'une machine électrique polyphasée selon la revendication no.5, dont il est caractéristique, que les éléments du conducteur sont préfabriqués sans un rayon du pli, en assemblant des pièces - coupées d'une lame du conducteur - dans la forme d'une <U> et qu'après, elles sont, sauf aux extrémités, couvertes d'une couche d'isolation.

7. Procédure pour la fabrication d'une machine électrique polyphasée selon la revendication no.5, dont il est caractéristique, que tous les éléments du conducteur d'une couche conductrice polyphasée sont montés dans deux tas de tête de bobine aux moitiés des barres de la rainure élevées, et que les deux moitiés sont jointes dans une phase de fabrication, et qu'après, elles sont soudées aux extrémités non-isolées du conducteur.

8. Procédure pour la fabrication d'une machine électrique polyphasée selon la revendication no.5, dont il est caractéristique que les segments, qui portent le flux magnétique, ne sont pas montés dans le bobinage disposé, avant que le bobinage ne soit pas assemblé complètement et avant que les points de jonction ne soient pas couverts d'une couche d'isolation.
